(19) **Europäisches Patentamt / European Patent Office / Office européen des brevets**

(11) **EP 2 179 510 B1**

(12) **FASCICULE DE BREVET EUROPEEN**

| | |
|---|---|
| (45) Date de publication et mention de la délivrance du brevet: **06.07.2011 Bulletin 2011/27** | (51) Int Cl.: **H04B 1/28** (2006.01) **H04B 1/40** (2006.01) |
| (21) Numéro de dépôt: **08803039.0** | (86) Numéro de dépôt international: **PCT/EP2008/060698** |
| (22) Date de dépôt: **14.08.2008** | (87) Numéro de publication internationale: **WO 2009/024530 (26.02.2009 Gazette 2009/09)** |

(54) **RÉCEPTEUR DE SIGNAUX HAUTE FRÉQUENCE RECEVANT SIMULTANÉMENT PLUSIEURS TELS SIGNAUX**

HOCHFREQUENZSIGNALEMPFÄNGER ZUM GLEICHZEITIGEN EMPFANG MEHRERER SOLCHER SIGNALE

HIGH-FREQUENCY SIGNAL RECEIVER SIMULTANEOUSLY RECEIVING SEVERAL SUCH SIGNALS

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **17.08.2007 FR 0705885**

(43) Date de publication de la demande:
**28.04.2010 Bulletin 2010/17**

(73) Titulaire: **THALES**
**92200 Neuilly-sur-Seine (FR)**

(72) Inventeur: **BIBAUT, Alain**
**F-91430 Igny (FR)**

(74) Mandataire: **Chaverneff, Vladimir et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A1- 2004 146 127     US-B1- 6 798 850**
**US-B1- 6 970 498**

- **EFSTATHIOU D: "ENABLING TRANSCEIVER TECHNOLOGY FOR MULTI-MODE, MULTI-STANDARD BASESTATIONS FOR 3G AND BEYOND. (THE ADI VIEW)" 2000 EUROPEAN CONFERENCE ON WIRELESS TECHNOLOGY CONFERENCE PROCEEDINGS. ECWT 2000. PARIS, OCT. 5 - 6, 2000, EUROPEAN CONFERENCE ON WIRELESS TECHNOLOGY. ECWT, LONDON : CMP, GB, 5 octobre 2000 (2000-10-05), pages 254-264, XP001060846 ISBN: 0-86213-217-7**
- **ZANGI K C ET AL: "SOFTWARE RADIO ISSUES IN CELLULAR BASE STATIONS" IEEE JOURNAL ON SELECTED AREAS IN COMMUNICATIONS, IEEE SERVICE CENTER, PISCATAWAY, NJ, US, vol. 17, no. 4, avril 1999 (1999-04), pages 561-573, XP000824303 ISSN: 0733-8716**
- **HENTSCHEL T: "CHANNELIZATION FOR SOFTWARE DEFINED BASE-STATIONS SELECTION DES CANAUX DANS LES STATIONS DE BASE DEFINIES PAR LOGICIEL" ANNALES DES TELECOMMUNICATIONS - ANNALS OF TELECOMMUNICATIONS, GET LAVOISIER, PARIS, FR, vol. 57, no. 5/6, mai 2002 (2002-05), pages 386-420, XP001122779 ISSN: 0003-4347**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**EP 2 179 510 B1**

• EFSTATHIOU D ED - INSTITUTE OF ELECTRICAL AND ELECTRONICS ENGINEERS: "SOFTCELL: A MULTI-CARRIER CHIP-SET FOR SOFTWARE DEFINABLE RADIO BASE-STATIONS" GLOBECOM'00. 2000 IEEE GLOBAL TELECOMMUNICATIONS CONFERENCE. SAN FRANCISCO, CA, NOV. 27 - DEC. 1, 2000, IEEE GLOBAL TELECOMMUNICATIONS CONFERENCE, NEW YORK, NY : IEEE, US, vol. VOL. 1 OF 3, 27 novembre 2000 (2000-11-27), pages 172-176, XP001195557 ISBN: 0-7803-6452-X

**Description**

La présente invention se rapporte à un récepteur de signaux haute fréquence recevant simultanément plusieurs tels signaux, et en particulier à un récepteur de radionavigation aérienne.

Pour se localiser en vol, par rapport à des points fixes au sol, un aéronef reçoit un certain nombre de signaux émis par des balises situées en ces points. Ces signaux permettent de désigner soit la distance au point fixe, soit une orientation dans le plan horizontal tangent à la terre et contenant ce point, soit une orientation par rapport à sa verticale locale. Pour traiter ces signaux, l'aéronef est équipé d'une constellation d'antennes, reliées par câbles coaxiaux à des récepteurs dédiés, ceux-ci étant installés dans une baie électronique proche de la cabine de pilotage.

Or, la plupart des récepteurs de navigation en question ont une architecture voisine :

- une antenne adaptée à la porteuse du signal et à sa bande passante,
- un circuit de démodulation de la porteuse HF (haute fréquence),
- un circuit de filtrage du signal démodulé pour ne garder que la bande de fréquence utile (bande vidéo),
- un circuit d'échantillonnage du signal obtenu à une fréquence d'échantillonnage adaptée au signal vidéo ($f_{cch}$ est égale à au moins 2 fois la bande vidéo pour respecter le principe de Shannon) : c'est ce qu'on appelle la conversion analogique/numérique,
- un circuit de traitement du signal proprement dit,
- un circuit d'alimentation qui convertit l'énergie fournie par l'aéronef en différentes tensions continues alimentant chaque étage du récepteur,
- des interfaces pour gérer les protocoles :

  ■ avec le bus provenant du calculateur central de l'aéronef ;
  ■ avec les sorties audio à destination du pilote

- un système d'autotest (« BITE » : « Built-In Test Equipment »), pour assurer la qualité des informations fournies.

Pour véhiculer des signaux dont les spectres fréquentiels sont voisins, ou même recouvrants, le procédé couramment utilisé consiste à décaler ces signaux en fréquence sur des porteuses différentes avant de les émettre.

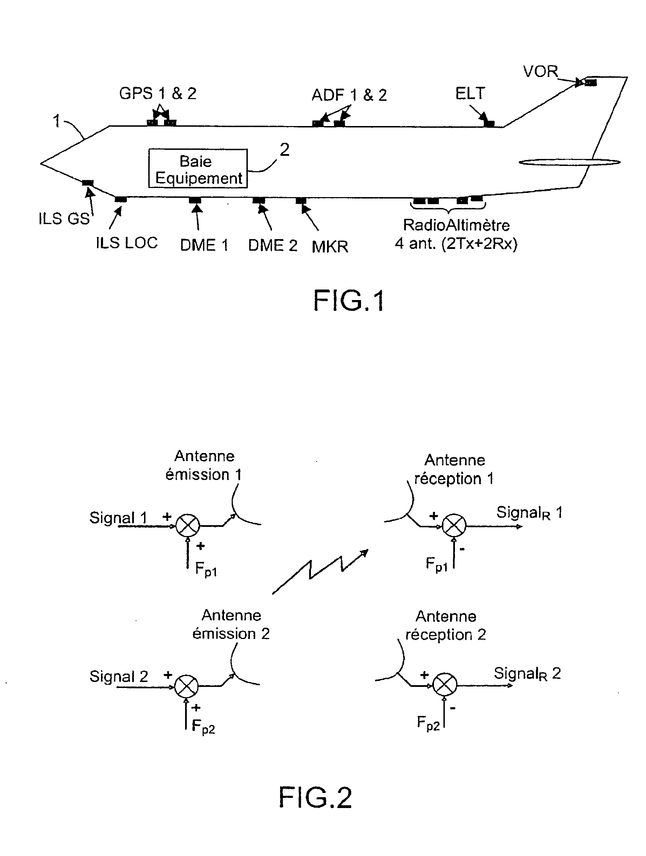

On a représenté en figure 1 un exemple simplifié de disposition des antennes relatives aux équipements d'aide à la navigation aérienne d'un aéronef 1. Ces antennes sont, dans cet exemple, celles relatives aux équipements suivants : GPS (deux antennes), ADF (« Automatic Direction Finder » soit « dispositif automatique de détection de direction, avec deux antennes également), ELT (« Emergency Locator Transmitter », soit : « émetteur de localisation de secours »), VOR, ILS-GS (« ILS-Glide Slope », soit ILS de détermination de pente de descente), ILS-LOC (« ILS Localizer », soit ILS de localisation), DME-1 et DME-2 (« Distance Measuring Equipment », soit équipement de mesure de distance), MB (« Marker Beacon », soit : marqueur de balises) et Radio-altimètre (quatre antennes au total, à savoir deux en émission et deux en réception). Toutes ces antennes sont reliées par câbles coaxiaux à des équipements émetteurs et/ou récepteurs correspondants regroupés dans une baie électronique 2.

On a schématisé en figure 2 une partie d'un système de communication, qui peut être l'un de ceux mentionnés ci-dessus en référence à la figure 1, par exemple un système GPS. Les signaux à émettre (avant modulation d'une onde porteuse) dans un même système sont notés « signal 1 » et « signal 2 ». Ces signaux modulent une onde porteuse dont la fréquence est respectivement notée $F_{P1}$ et $F_{P2}$. Les ondes porteuses ainsi modulées sont émises par des antennes d'émission qui sont notées respectivement « Antenne émission 1 » et « Antenne émission 2 ». A bord de l'aéronef, la réception est assurée par les antennes de réception « Antenne réception 1 » et « Antenne réception 2 » respectivement., et sont démodulés grâce à des signaux d'oscillateurs locaux ayant les mêmes fréquences, $F_{P1}$ et $F_{P2}$ respectivement. On retrouve donc, après démodulation, les deux signaux « signal 1 » et « signal 2 ». Le cas échéant, les fréquences des oscillateurs locaux sont supérieures ou inférieures à $F_{P1}$ et $F_{P2}$ respectivement d'une valeur FI, qui est, de façon classique, la valeur de la fréquence intermédiaire modulée que l'on désire obtenir à la sortie de la démodulation.

Sur la figure 3, on a représenté en superposition dans un même système de coordonnées les diagrammes des signaux « signal 1 » et « signal 2 », les échelles des fréquences et des puissances étant communes à ces deux signaux. On note un recouvrement important de ces deux signaux.

Sur la figure 4, on a représenté dans un même système de coordonnées les diagrammes des signaux émis par les deux antennes précitées. Leurs fréquences porteuses respectives étant suffisamment distantes l'une de l'autre, il n'y a aucun recouvrement entre ces deux signaux.

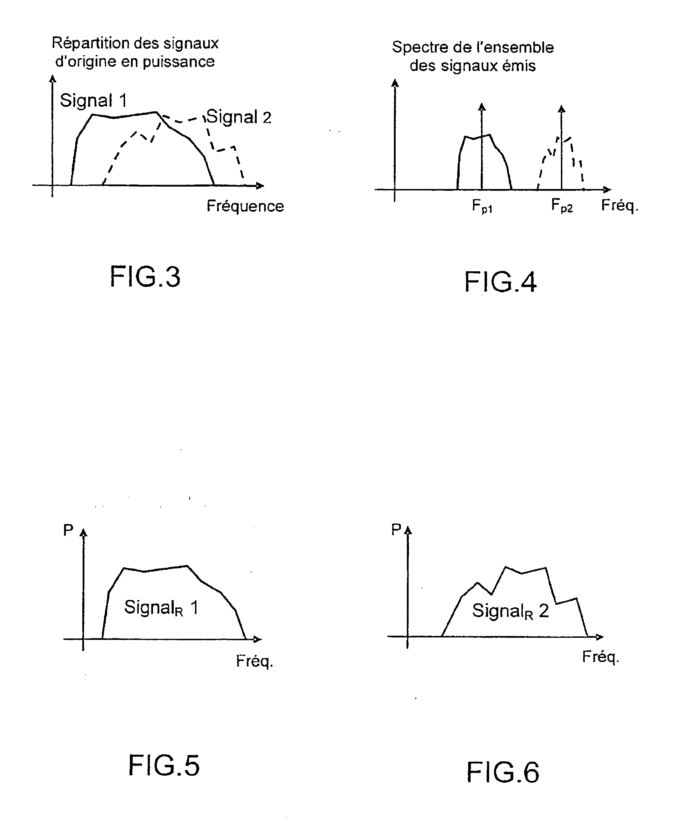

Enfin, en figures 5 et 6, on a respectivement représenté les deux signaux obtenus après démodulation. Ils sont respectivement identiques (aux déformations de transmission près) aux signaux « signal 1 » et « signal 2.

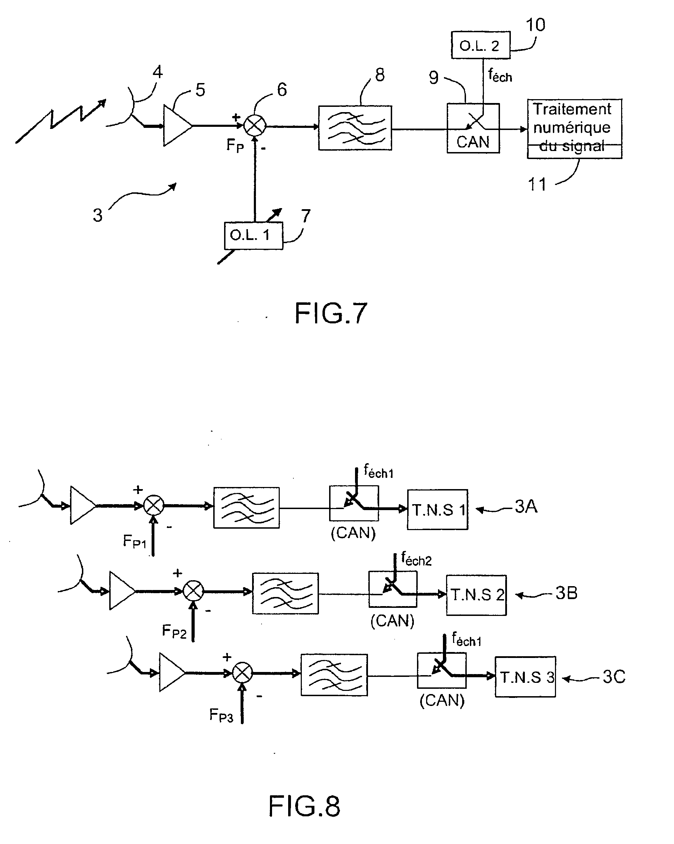

On a schématisé en figure 7 une voie de réception d'un récepteur de signaux RF classique, par exemple un récepteur de signaux GPS. De façon générale, on entend par « fréquences RF » des fréquences supérieures à 10 MHZ environ et pouvant aller jusqu'à plusieurs GHz ou dizaines de GHz. Le signal RF provenant d'un satellite est reçu par une antenne 4, amplifié le cas échéant par un amplificateur 5 et démodulé dans un mélangeur 6 recevant d'autre part le signal d'un oscillateur local 7. Le signal utile ainsi obtenu après démodulation passe dans un filtre 8 C chargé de filtrer les fréquences harmoniques de démodulation. Le signal analogique ainsi filtré est converti sous forme numérique par un convertisseur 9 dont la fréquence d'échantillonnage $f_{éch}$ est déterminée par un oscillateur 10. Le signal numérique résultant est envoyé à un circuit de traitement de signal numérique approprié 11.

Lorsque le récepteur en question doit recevoir simultanément plusieurs signaux RF à porteuses différentes, on utilise autant de voies de réception (comportant chacune les mêmes éléments 4 à 11 que la voie de réception 3 de la figure 7) qu'il y a de signaux à porteuses différentes. Ceci a été schématisé sur la figure 8, où les trois voies de réception sont référencées 3A, 3B, 3C. Dans ces voies, les fréquences des oscillateurs locaux de démodulation sont respectivement notées $F_{P1}$, $F_{P2}$ et $F_{P3}$. tandis que les fréquences d'échantillonnage sont respectivement notées $F_{éch\ 1}$, $F_{éch\ 2}$ et $F_{éch\ 3}$. Bien entendu, les circuits de traitement numérique de signal de ces trois voies de réception ne sont pas nécessairement identiques entre eux, mais adaptés aux traitements à réaliser. En avionique, le problème de l'encombrement, et surtout du poids, est très critique, et le fait de multiplier le nombre de canaux de réception est pénalisant.

En outre, les composants utilisés dans les voies de réception des récepteurs RF connus doivent être adaptés aux caractéristiques des signaux reçus à traiter, ce qui fait que l'on n'a pas proposé jusqu'à présent, pour chaque fonction de la voie de réception, un composant unique générique qui pourrait être facilement adapté à la fonction particulière que l'on désirerait lui conférer.

On connaît d'après le document US 6 798 850 B1 un récepteur de radiocommunication, mais ce document ne fournit aucune indication pour réaliser un récepteur générique de radionavigation.

La présente invention a pour objet un récepteur de signaux RF pouvant recevoir simultanément plusieurs signaux RF tout en comportant moins de circuits que les récepteurs RF connus et ayant des performances au moins aussi bonnes que ces récepteurs connus.

La présente invention a également pour objet un module générique pouvant être utilisé dans le grand nombre possible de ces récepteurs, en le programmant spécifiquement pour chaque tâche.

La présente invention a également pour objet de tels modules génériques qui puissent traiter plusieurs signaux simultanément, lorsque leurs caractéristiques le permettent.

Le récepteur conforme à l'invention est un récepteur de signaux haute fréquence recevant simultanément plusieurs tels signaux reçus par au moins une antenne et comportant des circuits de conversion analogique numérique convertissant ces signaux sous forme numérique, et comportant des circuits numériques de filtrage individuel filtrant respectivement chacune des fréquences porteuses de ces signaux et des circuits de traitement numérique, du type comportant, pour des signaux dont la porteuse est plus élevée que la fréquence d'échantillonnage maximale disponible, un circuit de démodulation en amont du circuit de conversion analogique numérique et un circuit de filtrage des harmoniques de démodulation, et il est caractérisé en ce qu'il est un récepteur de radionavigation d'aéronef et que le module est disposé à proximité immédiate de l'antenne correspondante et est relié au calculateur central de l'aéronef par un bus numérique, et qu'il est un récepteur générique comportant des moyens numériques de traitement simultané de plusieurs signaux de radionavigation.

De façon avantageuse, les circuits numériques de filtrage sont des filtres passe-bande. Selon une autre caractéristique de l'invention, le récepteur comporte, pour des signaux dont la porteuse est plus élevée que la fréquence d'échantillonnage maximale disponible, un circuit de démodulation en amont du circuit de conversion analogique/ numérique et un circuit de filtrage des harmoniques de démodulation, et les circuits numériques de filtrage individuel sont des filtres de résidus de porteuse.

La présente invention sera mieux comprise à la lecture de la description détaillée d'un mode de réalisation, pris à titre d'exemple non limitatif et illustré par le dessin annexé, sur lequel :

- la figure 1, déjà décrite ci-dessus, est un schéma très simplifié montrant un exemple de localisation d'antennes d'un aéronef civil classique,
- la figure 2, déjà décrite ci-dessus, est un diagramme simplifié montrant comment sont émis et reçus selon l'art antérieur deux signaux dont les spectres fréquentiels sont voisins,
- les figures 3 à 6, déjà décrites ci-dessus, sont des diagrammes amplitude / fréquence des signaux apparaissant dans le système de la figure 2,
- la figure 7, déjà décrite ci-dessus, est un bloc-diagramme d'un récepteur classique de signaux RF,
- la figure 8, déjà décrite ci-dessus, est un bloc-diagramme d'un récepteur classique similaire à celui de la figure 7, mais modifié en vue de recevoir simultanément plusieurs signaux RF de fréquences porteuses différentes,

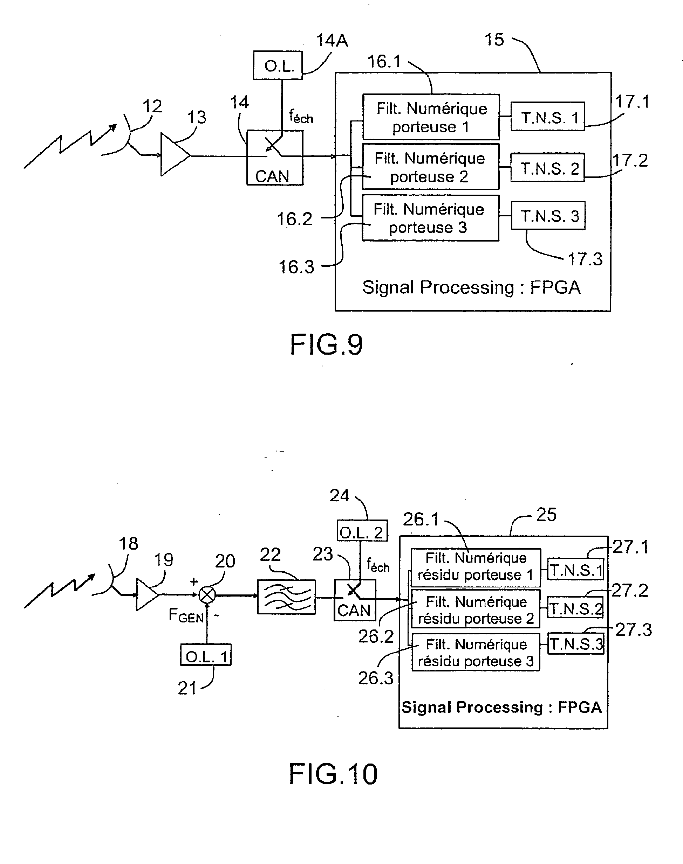

- les figures 9 et 10 sont des blocs-diagrammes de récepteurs de signaux RF conformes à la présente invention,

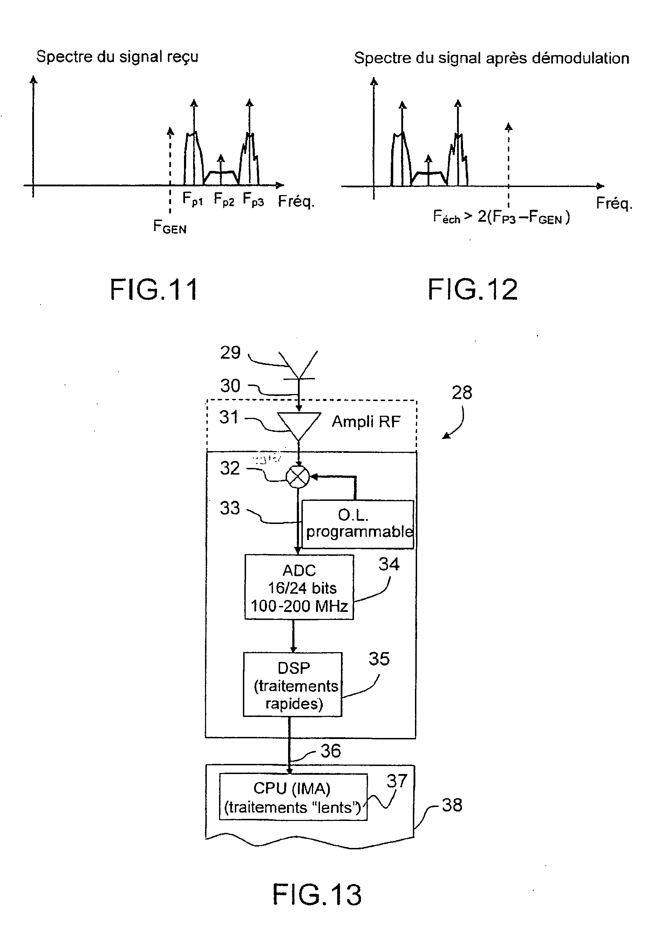

- les figures 11 et 12 sont de diagrammes amplitude / fréquence des signaux tels que reçus par le récepteur de l'invention et après démodulation par ce récepteur, et
- la figure 13 est un bloc-diagramme d'un exemple de réalisation d'un module générique conforme à la présente invention.

La présente invention est décrite ci-dessous en référence à la réalisation de récepteurs embarqués d'aéronefs, mais il est bien entendu qu'elle n'est pas limitée à cette seule application, et qu'elle peut être mise en oeuvre dans tout système susceptible de recevoir simultanément plusieurs signaux haute fréquence, et en particulier des signaux de fréquence porteuse supérieure à une centaine de MHz, dont les fréquences porteuses sont proches les unes des autres.

Les avancées technologiques réalisées depuis une vingtaine d'années dans le domaine de l'échantillonnage et dans celui des processeurs utilisés pour le traitement numérique du signal permettent aujourd'hui de saisir les signaux, avec des fréquences d'échantillonnage très élevées, voire même au-dessus des fréquences porteuses utilisées.

La présente invention propose de réaliser la démodulation des signaux RF précités directement sous forme numérique.

Une caractéristique importante de l'invention est donc de traiter simultanément plusieurs signaux radiofréquence, directement en numérique, en filtrant les fréquences porteuses par des filtres numériques adaptés. Ces filtres ont pour but d'éliminer les résidus de démodulation (écarts de fréquence par rapport à la porteuse dus principalement aux mouvements de l'aéronef) et également de traiter des formes d'onde élaborées telles que : BPSK, D8-PSK (spécifique du signal VDB délivré par les balises ILS), etc...

On a schématisé en figure 9 une voie de réception conforme à l'invention. Cette voie comporte, dans l'ordre du cheminement des signaux reçus par une antenne large bande 12 : un étage d'amplification 13, un convertisseur analogique/ numérique 14 dont la fréquence d'échantillonnage est déterminée par un oscillateur local 14A, et un module 15 de traitement de signal numérique. Les signaux reçus sont, dans le présent exemple, au nombre de trois (mais il est bien entendu que ce nombre peut être différent) et ont respectivement pour fréquence porteuse $F_{p1}$, $F_{p2}$ et $F_{p3}$. On suppose ici que les trois fréquences porteuses sont suffisamment proches les unes des autres pour être encadrées par la bande de sortie du mélangeur. Le module 15 comporte, dans l'exemple représenté, pour les trois signaux à traiter, trois voies de traitement en parallèle comprenant chacune un filtre numérique, de type passe-bande, respectivement référencés 16.1 à 16.3, suivis chacun d'un circuit numérique de traitement de signal, respectivement référencés 17.1 à 17.3. Les filtres 17.1 à 17.3 sont des filtres passe-bande dont la fréquence centrale est respectivement égale à la fréquence porteuse de chacun des trois signaux précités.

L'oscillateur local 14 délivre une fréquence d'échantillonnage $F_{éch}$ dont la valeur est dans le présent exemple supérieure à la plus grande des trois fréquences porteuses. Si la fréquence d'échantillonnage maximale possible est inférieure à la plus petite des trois fréquences porteuses ($F_{p1}$, $F_{p2}$ et $F_{p3}$), on met en oeuvre la voie de réception représentée en figure 10.

La voie de réception de la figure 10 comporte, dans l'ordre de cheminement des signaux reçus par une antenne large bande 18 : un étage d'amplification 19, un mélangeur 20 relié à un premier oscillateur local 21 (fournissant un signal oscillant à la fréquence $F_{GEN}$), un circuit 22 de filtrage des harmoniques de démodulation, un convertisseur analogique/ numérique 23 relié à un deuxième oscillateur local 24 (fournissant un signal oscillant à la fréquence $F_{éch}$) et un module 25 de traitement numérique. Ce module 25 comporte, pour chacun des trois signaux reçus et convertis, un filtre numérique de résidu de porteuse (26.1 à 26.3 respectivement) suivi d'un circuit de traitement numérique approprié (27.1 à 27.3 respectivement).

Sur le diagramme de la figure 11, on a représenté le spectre des trois signaux reçus par la voie de réception de la figure 10. Ces signaux ont des fréquences porteuses telles que $F_{p1}< F_{p2}< F_{p3}$ et que ces signaux ne se chevauchent pas mutuellement, tout en étant le plus proche possible les uns des autres (afin que l'antenne 18 puisse les transmettre tous sans pratiquement les affaiblir). La fréquence du signal de l'oscillateur 24 est inférieure à $F_{p1}$.

Sur le diagramme de la figure 12, on a représenté le spectre des trois signaux après démodulation, juste avant le filtrage par le filtre 22. Afin de satisfaire le critère de Shannon, on choisit la fréquence d'échantillonnage $F_{éch}$ telle que :

$$F_{éch} > 2(F_{p3} - F_{GEN})$$

Ces spectres de la figure 12 sont les mêmes que ceux de la figure 11, mais l'ensemble des trois spectres est décalé vers des fréquences plus basses, inférieures à $F_{éch}$.

L'intérêt de ces architectures des figures 9 et 10 est de n'utiliser qu'une seule voie RF, commune à tous les signaux que l'on cherche à traiter. Cela permet de diminuer considérablement la quantité de composants RF (en général de coût plus élevé que celui du matériel MF ou du matériel numérique) et de reporter la spécificité du traitement MF dans la partie numérique.

De même, la partie « traitement de signal » présente également un grand nombre de points communs d'un récepteur à l'autre en ce qui se rapporte à la gestion des interfaces (bus, soties audio) et à la gestion des autotests.

On a représenté en figure 13 un schéma simplifié d'un exemple de réalisation pratique d'un module générique conforme à l'invention, personnalisable en vue de le conformer en voie de réception d'un récepteur aéronautique. Cette voie de réception peut comporter tout ou partie des éléments 13 à 15 de la figure 9 ou bien, moyennant quelques adaptations, tout ou partie des éléments 19 à 25 de la figure 10.

Le module générique 28 est relié à une antenne 29 par un câble coaxial 30 suivi d'un amplificateur RF 31. En variante, l'amplificateur 31 peut être intégré au module 28, comme représenté en traits interrompus sur la figure. Selon une autre variante (non représentée), on peut intercaler entre l'antenne 29 et l'amplificateur 31 une batterie de plusieurs filtres mis en parallèle, l'un de ces filtres ou plusieurs d'entre eux étant effectivement reliés, selon les besoins, entre l'antenne et l'amplificateur par l'intermédiaire de commutateurs appropriés.

Le module 28 comporte, dans cet exemple, un mélangeur 32 relié d'une part à la sortie de l'amplificateur 31, et d'autre part à un oscillateur programmable 33. La sortie du mélangeur 32 est reliée à un convertisseur analogique/ numérique 34 programmable. La sortie du convertisseur 34 est reliée à un bloc de traitement numérique programmable 35 effectuant des traitements similaires à ceux effectués par le module 15 de la figure 9, c'est-à-dire des traitements de signal rapides sur tous les N signaux reçus (et comportant donc N filtres numériques et N circuits de traitement numérique, non représentés sur le dessin). De façon avantageuse, le module 28 est disposé à proximité immédiate de l'antenne 29 et est relié par un bus numérique 36 au calculateur central 37 de l'aéronef, disposé dans la baie électronique 38 (similaire à la baie 2 de la figure 1, mais, selon une autre caractéristique de l'invention, ne comportant plus ou pratiquement plus de récepteurs centralisés). Les éléments 33, 34 et 35 sont avantageusement réalisés en tant que circuits logiques de type ASIC ou FPGA. Ces circuits, et en particulier le circuit de traitement numérique 35 peuvent donc effectuer des traitements rapides, alors que le calculateur 37 effectue des traitements « lents ». Le module 28 peut être facilement disposé dans un boîtier de petites dimensions (par exemple d'un volume d'un litre environ), et il peut être alimenté par une tension d'alimentation continue unique convenant à l'ensemble des circuits qu'il contient.

Une application intéressante du module de l'invention peut être le traitement simultané de l'ILS Loc et du VOR, qui travaillent à des fréquences VHF porteuses voisines.

Une autre application, en bande L, pourrait être la réception simultanée du GPS, de SatCom et du DME. Toutefois, les deux récepteurs DME et SatCom travaillent à la fois en émission et en réception, ce qui est généralement un obstacle pour l'intégration de ces trois fonctions dans le même module.

Le concept de module générique de navigation est réversible, c'est-à-dire qu'on peut préparer les signaux à émettre dans le DSP, puis les moduler (après conversion Numérique/Analogique) sur une porteuse adaptée à la sous-bande à émettre. Toutefois, l'invention dans ce cas ne peut s'appliquer qu'à des signaux présentant des dynamiques de codage communes (niveaux d'énergie voisins) afin de présenter une technologie commune. Ce qui n'est pas le cas de SatCom (60 $W_{max}$) et du DME (20 $W_{moyen}$, 300 $W_{crête}$).

Donc ce procédé, en première analyse, s'applique plus avantageusement aux récepteurs passifs tels que:

- ILS Loc
- ILS G/S
- VOR
- MKR
- ADF

Selon l'invention, l'architecture qui présente le meilleur rapport ergonomie/coût pour les systèmes de radionavigation et de mesure de grandeurs extérieures à l'aéronef, que ce soit en termes de coûts de développement, de production ou d'installation est souvent celle consistant à installer un module récepteur générique par antenne, récepteur unique qui sera programmé au moment de l'installation, ce récepteur étant disposé le plus près possible de l'antenne, relié par bus numérique au calculateur central (généralement celui de la baie similaire à la baie 2 de la figure 1, mais ne comportant plus ou pratiquement plus de récepteurs centralisés) et alimenté par une alimentation centralisée de la baie.

## Revendications

1. Récepteur de signaux haute fréquence recevant simultanément plusieurs tels signaux reçus par au moins une antenne et comportant des circuits de conversion analogique/numérique (14, 14A ou 23, 24 ou 34) convertissant ces signaux sous forme numérique, et comportant des circuits numériques de filtrage individuel filtrant respectivement chacune des fréquences porteuses de ces signaux (16.1 à 16. 3 ou 26.1 à 26.3 ou 35) et des circuits de traitement numérique (17.1 à 17.3 ou 27.1 à 27.3 ou 35), du type comportant, pour des signaux dont la porteuse est plus élevée que la fréquence d'échantillonnage maximale disponible, un circuit de démodulation (20, 21) en amont du circuit de conversion analogique/ numérique (23, 24) et un circuit de filtrage des harmoniques de démodulation (22), **caractérisé en ce qu'**il est un récepteur de radionavigation d'aéronef et que le module est disposé à proximité immédiate de l'antenne correspondante et est relié au calculateur central (37) de l'aéronef par un bus numérique (36), et qu'il est un récepteur générique comportant des moyens numériques de traitement simultané de plusieurs signaux de radionavigation

2. Récepteur selon la revendication 1, **caractérisé en ce que** les signaux de radionavigation sont deux au moins des signaux suivants : ILS, ILS-Loc, ILS-GS, VOR, MKR, ADF, ELT, DME-1, DME-2, MB.

3. Récepteur selon la revendication 1 ou 2, **caractérisé en ce que** les circuits numériques de filtrage individuel (26.1 à 26.3) sont des filtres de résidus de démodulation dus aux écarts de fréquence par rapport à la porteuse.

4. Récepteur selon l'une des revendications précédentes, **caractérisé en ce que** les circuits numériques de filtrage sont des filtres passe-bande (16.1 à 16.3).

5. Récepteur selon l'une des revendications précédentes, **caractérisé en ce qu'**au moins une partie de ses composants numériques est incluse dans un module en circuit intégré (15,25 ou 28).

6. Récepteur selon la revendication 5, **caractérisé en ce qu'**au moins une partie des composants numériques du module est programmable (33, 34, 35).

7. Récepteur selon l'une des revendications 5 ou 6, **caractérisé en ce que** le module comporte en outre un amplificateur RF (31).

8. Récepteur selon l'une des revendications 5 à 7, **caractérisé en ce que** le module comporte en outre une batterie de filtres commutables en aval de l'antenne.

**Claims**

1. A high-frequency signal receiver simultaneously receiving several of said high-frequency signals received by at least one antenna and comprising analogue/digital conversion circuits (14, 14A or 23, 24 or 34) converting said signals into a digital format and comprising digital circuits for individual filtering which respectively filter each of the carrier frequencies of said signals (16.1 to 16.3 or 26.1 to 26.3 or 35) and digital processing circuits (17.1 to 17.3 or 27.1 to 27.3 or 35) of the type comprising, for signals for which the carrier frequency is higher than the maximum available sampling frequency, a demodulation circuit (20, 21) upstream of the analogue/digital conversion circuit (23, 24) and a circuit for filtering the demodulation harmonics (22), **characterised in that** it is a radio-navigation receiver for an aircraft and that the module is arranged within the immediate vicinity of the corresponding antenna and is connected to the central computer (37) of the aircraft via a digital bus (36), and that it is a generic receiver comprising digital means for simultaneously processing several radio-navigation signals.

2. The receiver according to claim 1, **characterised in that** the radio-navigation signals are at least two of the following signals: ILS, ILS-Loc, ILS-GS, VOR, MKR, ADF, ELT, DME-1, DME-2 and MB.

3. The receiver according to claim 1 or 2, **characterised in that** the digital circuits for individual filtering (26.1 to 26.3) are filters of the demodulation residues due to the frequency deviations compared to the carrier frequency.

4. The receiver according to any one of the preceding claims, **characterised in that** the digital filtering circuits are band-pass filters (16.1 to 16.3).

5. The receiver according to any one of the preceding claims, **characterised in that** at least part of its digital components is included in an integrated circuit module (15, 25 or 28).

6. The receiver according to claim 5, **characterised in that** at least part of the digital components of the module is programmable (33, 34, 35).

7. The receiver according to any one of claims 5 to 6, **characterised in that** the module further comprises an RF amplifier (31).

8. The receiver according to any one of claims 5 to 7, **characterised in that** the module further comprises a bank of filters which can be switched downstream of the antenna.

**Patentansprüche**

1. Hochfrequenzsignalempfänger, der gleichzeitig mehrere von wenigstens einer Antenne empfangene Hochfrequenzsignale empfängt und Analog/Digital-Wandlerschaltungen (14, 14A oder 23, 24 oder 34), die diese Signale in ein digitales Format umwandeln, und digitale Schaltungen zum individuellen Filtern umfasst, die jeweils die einzelnen Trägerfrequenzen der Signale (16.1 bis 16.3 oder 26.1 bis 26.3 oder 35) und digitale Verarbeitungsschaltungen (17.1 bis 17.3 oder 27.1 bis 27.3 oder 35) des Typs umfassen, der für Signale, deren Trägerfrequenz höher ist als die maximale verfügbare Abtastfrequenz, eine Demodulationsschaltung (20, 21) oberhalb der Analog/Digital-Wandlungsschaltung (23, 24) und eine Schaltung zum Filtern der Demodulationsoberwellen (22) umfasst, **dadurch gekennzeichnet, dass** es sich um einen Funknavigationsempfänger für ein Luftfahrzeug handelt und dass das Modul in unmittelbarer Nähe zu der entsprechenden Antenne angeordnet und mit dem zentralen Computer (37) des Luftfahrzeugs über einen digitalen Bus (36) verbunden ist, und dass es sich um einen generischen Empfänger handelt, der digitale Mittel zum gleichzeitigen Verarbeiten mehrerer Funknavigationssignale umfasst.

2. Empfänger nach Anspruch 1, **dadurch gekenn-**

**zeichnet, dass** die Funknavigationssignale wenigstens zwei der folgenden Signale sind: ILS, ILS-Loc, ILS-GS, VOR, MKR, ADF, ELT, DME-1, DME-2 und MB.

3. Empfänger nach Anspruch 1 oder 2, **dadurch gekennzeichnet, dass** die digitalen Schaltungen zum individuellen Filtern (26.1 bis 26.3) Filter für Demodulationsreste aufgrund von Frequenzabweichungen im Vergleich zur Trägerfrequenz sind.

4. Empfänger nach einem der vorherigen Ansprüche, **dadurch gekennzeichnet, dass** die digitalen Filterschaltungen Bandpassfilter (16.1 bis 16.3) sind.

5. Empfänger nach einem der vorherigen Ansprüche, **dadurch gekennzeichnet, dass** wenigstens ein Teil seiner digitalen Komponenten in einem integrierten Schaltungsmodul (15, 25 oder 28) enthalten ist.

6. Empfänger nach Anspruch 5, **dadurch gekennzeichnet, dass** wenigstens ein Teil der digitalen Komponenten des Moduls programmierbar ist (33, 34, 35).

7. Empfänger nach einem der Ansprüche 5 bis 6, **dadurch gekennzeichnet, dass** das Modul darüber hinaus einen RF-Verstärker (31) umfasst.

8. Empfänger nach einem der Ansprüche 5 bis 7, **dadurch gekennzeichnet, dass** das Modul ferner eine Filtergruppe umfasst, die stromabwärts von der Antenne geschaltet werden kann.

GPS 1 & 2          ADF 1 & 2          ELT          VOR

1

Baie
Equipement          2

ILS GS'

ILS LOC    DME 1    DME 2    MKR

RadioAltimètre
4 ant. (2Tx+2Rx)

## FIG.1

Antenne
émission 1

Antenne
réception 1

Signal 1    +                                        Signal$_R$ 1

$F_{p1}$          $F_{p1}$

Antenne
émission 2

Antenne
réception 2

Signal 2    +                                        Signal$_R$ 2

$F_{p2}$          $F_{p2}$

## FIG.2

Répartition des signaux
d'origine en puissance

Signal 1

Signal 2

Fréquence

# FIG.3

Spectre de l'ensemble
des signaux émis

$F_{p1}$    $F_{p2}$    Fréq.

# FIG.4

P

$Signal_R$ 1

Fréq.

# FIG.5

P

$Signal_R$ 2

Fréq.

# FIG.6

FIG.7

FIG.8

14A

O.L.

16.1

15

12   13   14

Filt. Numérique
porteuse 1

T.N.S. 1

17.1

f_éch

CAN

Filt. Numérique
porteuse 2

T.N.S. 2

17.2

16.2

Filt. Numérique
porteuse 3

T.N.S. 3

16.3

17.3

Signal Processing : FPGA

**FIG.9**

24

O.L. 2

26.1

25

18   19   20   22   23

Filt. Numérique
résidu porteuse 1

T.N.S.1

27.1

f_éch

Filt. Numérique
résidu porteuse 2

T.N.S.2

27.2

F_GEN   CAN

26.2

Filt. Numérique
résidu porteuse 3

T.N.S.3

27.3

O.L. 1

26.3

21

Signal Processing : FPGA

**FIG.10**

EP 2 179 510 B1

Spectre du signal reçu

Spectre du signal après démodulation

$F_{p1}$  $F_{p2}$  $F_{p3}$   Fréq.

$F_{GEN}$

$F_{éch} > 2(F_{P3} - F_{GEN})$

Fréq.

FIG.11

FIG.12

29

30

31   Ampli RF

28

32

33   O.L. programmable

ADC
16/24 bits
100-200 MHz   34

DSP
(traitements
rapides)   35

36

CPU (IMA)
(traitements "lents")   37

38

FIG.13

13

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6798850 B1